# EUROPEAN PATENT SPECIFICATION

(11) **EP 3 405 002 B1**
(45) Date of publication and mention of the grant of the patent: **17.07.2024**
(21) Application number: 18171796.8
(22) Date of filing: 11.05.2018
(51) Int. Cl.: H05B 3/14

(54) **CARBON COMPOSITE COMPOSITION AND CARBON HEATER MANUFACTURED USING THE SAME**
KOHLENSTOFFVERBUNDSTOFFZUSAMMENSETZUNG UND UNTER VERWENDUNG DAVON HERGESTELLTER KOHLENSTOFFHEIZER
COMPOSITION COMPOSITE DE CARBONE ET ÉLÉMENT CHAUFFANT DE CARBONE EN ÉTANT FABRIQUÉ

(30) Priority: 10.05.2017 KR 20170058076
(43) Date of publication of application: 21.11.2018
(73) Proprietor: LG Electronics Inc., Yeongdeungpo-Gu Seoul 07336 (KR); Industry Foundation of Chonnam National University, Gwangju 61186 (KR)
(72) Inventor: Lee, Youngjun, Seoul 08592 (KR); Yang, Kap Seung, Gwangju 61109 (KR); Kim, Sang Wan, Siheung-si 15024 (KR)
(74) Representative: Vossius & Partner Patentanwälte Rechtsanwälte mbB

(56) References cited:
- DE-C1- 4 413 127
- FR-A- 1 300 359
- JP-A- 2016 067 993
- KR-A- 20150 141 382
- US-A- 4 525 461
- US-A- 5 420 399
- US-A1- 2002 142 146
- US-A1- 2003 180 538
- US-A1- 2006 272 796
- US-A1- 2007 032 370

## Description

### BACKGROUND

### 1. Field of the Invention

The present invention relates to a carbon composite composition for manufacturing a heating element and a carbon heater manufactured using the same, in a carbon heater used as a heater for applying heat in the field of a cooking appliance such as an oven.

### 2. Description of Related Art

In recent times, an oven using a heater as a cooking appliance for family use or commercial use has been widely used.

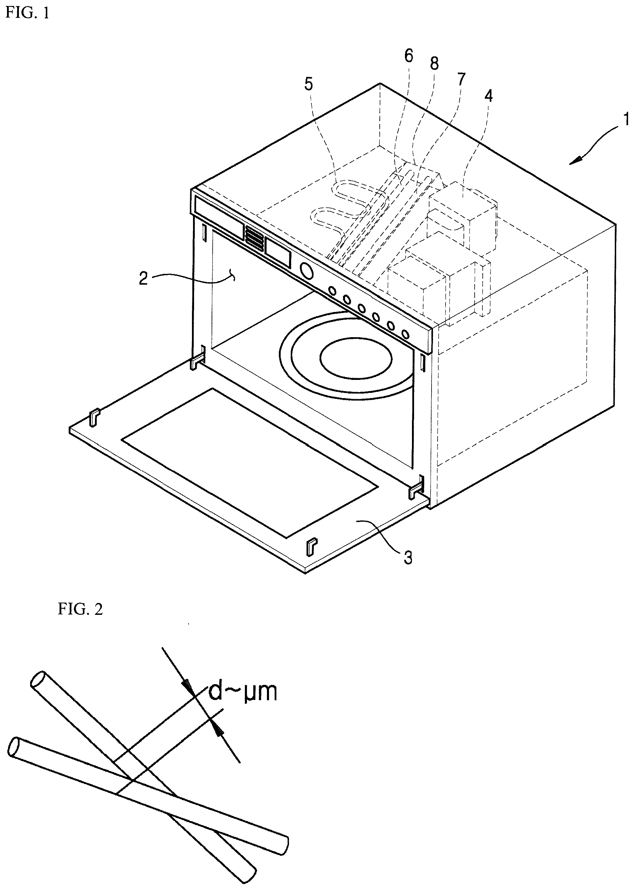

FIG. 1 is a perspective view showing a general structure of an oven. Referring to FIG. 1, an oven 1 is provided with a cavity 2 in which food to be cooked is placed, a door 3 for selectively opening the cavity 2, and a plurality of heaters 6 for applying heat to the cavity 2.

In particular, the heater 6 is provided with one or more heaters, and is protected by a cover 8 from the exterior of the cavity 2. Further, in order to apply an electromagnetic wave heating method, a magnetron 4 is provided on the exterior of an upper surface of the cavity 2. The magnetron 4 generates electromagnetic waves, and the generated electromagnetic waves are radiated to an inner space of the cavity 2 through a predetermined waveguide and a stirrer. In addition, a sheath heater 5 is provided on an upper side of the inner space of the cavity, as necessary.

The heaters are different from each other in terms of an operation depending on a material, a heating method and the like thereof. Among the heaters, a carbon heater, which is generally used as the sheath heater 5 and the heater 6, is a grill heater that heats food inside the cavity 2 using a radiant heating method.

For a conventional carbon heater, a carbon fiber (CF) is mainly used. Generally, the CF refers to a fibrous carbon material having a carbon content of 90% or more. Such CF is widely used in various fields because it has flexibility, high strength, high elasticity, and adsorbability as well as basic properties of a carbon material such as heat resistance, chemical stability, electrical conductivity, thermal conductivity, mechanical strength, biocompatibility and the like.

In particular, the CF has a high thermal conductivity, a low coefficient of thermal expansion, and high thermal shock resistance. For this reason, recently, the CF has been widely used as a structural material or a functional material for high temperature such as heat rays, heaters and the like.

Since the CF is made of a material called "carbon", it has a microwave absorption property of carbon itself. Further, the CF has an inherent property that a ratio of a fiber length to a fiber diameter is very large in view of properties of a shape of "fiber".

The inherent properties of such CF cause some problems when the CF is used as a heating source of the oven.

As shown in FIG. 2, the CF is made of single carbon filaments. However, the filaments not only have a diameter but also an interval between filaments of several micrometers (*µ*m). Thus, under high electromagnetic fields, a high voltage is applied to a very narrow distance (interval) between the filaments. For example, when a voltage of 10 V is applied to an interval of 1 *µ*m, a high voltage of about 10⁷ V/m is applied between filaments. In this case, the filaments are likely to cause a dielectric breakdown, and sometimes a spark occurs.

In the meantime, the carbon heater consists of a carbon fiber, a connector for applying electricity to the carbon fiber, a quartz tube including the carbon fiber and the connector, and an assembly (or a unit) composed of encapsulation gas such as Ar and the like sealed in the tube. Also, the encapsulation gas maintains a vacuum atmosphere of about 10⁻¹ to 10⁻² torr. However, as described above, when a high voltage is applied between the filaments, plasma is produced due to an inert gas atmosphere under a high voltage, even though a dielectric breakdown or a spark of the filaments does not occur.

Conventionally, a shield member is provided between a carbon heater and a cabin to suppress a reaction of the plasma and the like, and a progress of light to the cabin due to the plasma. However, since the shield member not only shields plasma light, but also partially blocks radiation light emitted from the carbon heater, radiation efficiency of the oven is greatly lowered.

Therefore, a new type of carbon heater instead of the conventional carbon fiber is required.

The related art is disclosed in KR Patent Application Publication No. 10-2011-0109697 (October 6, 2011).

FR1300359 A discloses an electric heating rod of the type comprising a hot zone for use in hightemperature furnaces, having the following features, considered separately or collectively: a. it is made of recrystallized silicon carbide, and the hot zone is impregnated with a molybdenum silicidebased compound; b. The hot zone has the shape of a helix; c. This helix has sufficient mechanical strength to remain self-supporting at a working temperature of between 1400 and 1800 °C, the pitch of the helix determining the electrical resistance of this hot zone; d. The hot zone is arranged between cold ends impregnated with molybdenum silicide; e. The hot zone is arranged between cold ends impregnated with silicon; f . The cold ends contain boron in a quantity ranging from 0.078% to 5 % relative to the free-state silicon content, g. Boron is present in the form of carbon boride, titanium, zirconium or mixtures thereof; h. A refractory baffle is provided at each end of the hot zone, this baffle acting as a reflector for radiant energy, to minimize the transfer of thermic energy from the hot zone.

### SUMMARY OF THE INVENTION

The present invention aims to provide a carbon composite composition for a new carbon heater which does not cause a dielectric breakdown or a spark even under a high voltage in a carbon heater.

Further, the present invention aims to provide a carbon composite composition for a new carbon heater which does not cause plasma even under encapsulation gas and a high voltage in a carbon heater.

According to an aspect of the present invention, there may be provided a carbon composite composition according to claim 1.

In particular, the SiC is included in an amount of 50 to 75 wt.% (hereafter referred to as "%"), based on the total weight of the composition.

Also, the SiO₂ is included in an amount of 24% or less, based on the total weight of the composition.

In particular, the novolac resin is included in an amount of 15 to 30%, based on the total weight of the composition.

Preferably, the lubricant acts as a curing agent.

Further, the graphite is included in an amount of 0.1 to 10%, based on the total weight of the composition.

In order to solve the above-described technical issues, there may be provided a resistance heating element obtained from the aforementioned compositions according to an aspect of the present invention. The resistance heating element is preferably obtainable by curing and carbonizing the carbon composite composition of the present invention.

Unlike a carbon heater using a conventional carbon fiber, the carbon composite composition of the present invention does not generate a local concentration of voltage between filaments, which is a disadvantage inherent in a fiber shape, thereby preventing a dielectric breakdown or a spark from occurring.

Further, unlike the carbon heater using the conventional carbon fiber, the carbon composite composition of the present invention may fundamentally prevent plasma from occurring between filaments due to a local high voltage, and improve a decline in radiation efficiency because a shield member is not necessary.

Furthermore, the carbon composite composition of the present invention has no restriction on a shape, which is an inherent property of a composition, and thereby it is possible to easily manufacture a carbon heater of a desired shape necessary for an oven having various sizes and shapes.

In addition, the carbon composite composition of the present invention may control a specific resistance and an output of the carbon heater by changing constituent components and composition ranges of the composition, and thereby it is possible to improve a degree of freedom of an electrical design of the carbon heater.

Meanwhile, the carbon composite composition of the present invention is relatively excellent in resistance to surface oxidation or surface erosion which may occur frequently at a high temperature since a surface area ratio is relatively small in comparison to that of the conventional carbon fiber. Also, such property of the composition makes it possible to omit a post-treatment process such as a surface coating and the like which is necessary for the conventional carbon fiber, thereby improving the lead time and productivity.

### BRIEF DESCRIPTION OF THE DRAWINGS

FIG. 1 is a perspective view showing a general structure of an electric oven.
FIG. 2 is an enlarged view of a carbon fiber.
FIG. 3 is a flow chart schematically showing a method for manufacturing a carbon heater using a carbon composite composition of the present invention.
FIG. 4 shows a carbon composite extruded using a binary carbon composite composition of the present invention.
FIG. 5 shows a carbon composite which is heat treated for stabilization using a binary carbon composite composition of the present invention.
FIG. 6 shows a photograph of a surface (a) and a cross-section (b) of a carbon composite which is heat treated for stabilization using a ternary carbon composite composition of the present invention.
FIG. 7 shows a photograph of a surface (a) and a cross-section (b) of a carbon composite which is heat treated for stabilization using a quaternary carbon composite composition of the present invention.
FIG. 8 show a carbon heater product which is made of a heating element 11 using a composition of the present invention.

### DETAILED DESCRIPTION OF EXEMPLARY EMBODIMENTS

Hereinafter, a carbon composite composition, a carbon heater, and a method for manufacturing the same according to a preferred example of the present invention will be described in detail with reference to the accompanying drawings.

The present invention is not limited to the examples disclosed herein but may be implemented in various different forms. The examples are provided to make the description of the present invention thorough and to fully convey the scope of the present invention to those skilled in the art.

The carbon composite composition of the present invention includes an inorganic powder (herein also referred to as the base material) capable of serving as a main component of a heating element to be used as a high temperature heater and a binder for coupling the powder particles with one another, as essential components. Firstly, the base material comprises at least silicon carbide, and may further comprise silicon oxide (SiO₂) and aluminum oxide (Al₂O₃) as shown in Table 1 below.

Zirconium oxide (ZrO₂), boron nitride (BN) and molybdenum silicide (MoSi₂) also have been taken into consideration, but ZrO₂ and MoSi₂ have too low specific resistance to be used as a heater, and BN has a too high melting point which leads to an excessively high heat treatment temperature. For this reason, ZrO₂, BN, and MoSi₂ are not applicable.

**<Table 1. Properties of inorganic powders)**

| | Silicon Carbide | Silicon Oxide | Aluminium Oxide | Zirconium Oxide | Boron Nitride | Molybdenum Silicide |
|---|---|---|---|---|---|---|
| Melting point (°C) | 2,730°C | 1,600°C | 2,072°C | 2,715°C | 2,973°C | 2,030°C |
| Specific resistance (Ωcm) | > 10⁸ | > 10¹⁴ | > 10¹⁴ | > 10⁴ | > 10¹³ | 2 * 10⁻⁵ |
| Thermal conductivity (W/m·K) | 41 | 1.5 | 35 | 2.7 | 20 | 25 |

The composition of the present invention typically contains SiC since SiC, which has the lowest specific resistance among the inorganic powders, may stably maintain a specific resistance and an electric conductivity which are necessary properties for a heater, and the specific resistance may be too high to be used as a heater in case that the carbon composite composition is formed without SiC.

In the meantime, SiO₂ and/or Al₂O₃ in addition to SiC are added as a specific resistance controlling agent for controlling a specific resistance of a finally manufactured carbon heater since they each have high specific resistance.

And, SiC is preferably added in an amount of 50 to 75% based on the total weight of the composition, for the following reasons. When a content of SiC is less than 50%, a specific resistance of a finally manufactured carbon heater is excessively high and a thermal conductivity thereof is lowered, and thus disconnection is likely to occur. When the content of SiC exceeds 75%, the specific resistance of the carbon heater is lowered, so that it is difficult to use such carbon heater as a heater.

Here, SiO₂ is more preferable than Al₂O₃ since the melting point of SiO₂ is lower than that of Al₂O₃ so that the increase of a specific resistance of a carbon heater can be more easily controlled when a final heat treatment is performed thereon.

SiO₂ is preferably added at a maximum of 24% based on the total weight of the composition, for the following reasons. When a content of SiO₂ exceeds 24%, a thermal conductivity of the carbon heater is drastically lowered and thus a terminal disconnection may occur. In addition, when the manufactured carbon heater has an excessively high specific resistance due to a high specific resistance inherent in SiO₂, additional design changes such as reducing a length of the heater or widening a cross-sectional area may be required.

The phenolic resin of the present invention performs functions of both the binder resin and the carbon raw material. The phenolic resin is one of the oldest synthetic resins and has excellent heat resistance and flame retardancy.

The phenolic resin is generally synthesized by a reaction of phenol and formaldehyde, and the properties of the phenolic resin greatly vary depending on acidity of a catalyst used therefor.

In general, a novolac resin is produced when a catalyst is an acid. More specifically, the novolac resin is obtained by reacting phenol and formaldehyde in a formaldehyde to phenol molar ratio of 0.5:1 to 1:1 in the presence of an acidic catalyst such as sulfuric acid, hydrochloric acid, oxalic acid or the like. Under acidic catalysis, a condensation reaction occurs rapidly, and the novolac resin has a structure in which a large number of phenol nuclei are linked by a methylene group, and the novolac resin itself is a thermoplastic resin, so that the novolac resin has a property of not being cured without a curing agent. The novolac resin is cured by condensation curing or thermal curing, normally mixed with hexamine and cured by heating.

Conversely, a resol resin may be obtained by reacting phenol and formaldehyde in a formaldehyde to phenol molar ratio of 1:1 to 3:1 in the presence of a basic catalyst such as caustic soda or ammonia. Since the condensation reaction generally occurs more slowly than an addition reaction, the resol resin is produced as a compound of phenol alcohol having a relatively low molecular weight. That is, the resol resin has a structure in which many methylol groups are substituted in phenol nucleus. Such resol resin has a property of being cured at a room temperature or at a moderate temperature without a curing agent.

In the present invention, the novolac resin is more preferable as a phenolic resin. Description thereon is set forth as follows.

As described above, the carbon composite composition of the present invention essentially includes an inorganic powder to manufacture a carbon heater. In order to form a structure using such inorganic powder, it is necessary to perform an extrusion process and the like for forming a desired structure shape between a mixing process and a stabilization process which are generally used, or during a subsequent step. In particular, the extrusion process is a very common process in the technical field of using a resin. As it pertains to this matter, the present inventors found out that, in the resol resin, a curing reaction rapidly proceeds at a temperature and pressure at which the extrusion process is generally performed, and the carbon composite composition is cured before a carbon electrode is formed into a desired shape, so that extrusion molding is preferably not used when a resol resin is included.

The novolac resin of the present invention is preferably added in an amount of 15 to 30% based on the total weight of the composition. When a content of the novolac resin is less than 15%, not only the carbon composite obtained by performing the extrusion process is easily broken but also a content of carbon in the finally produced carbon heater is too low, so that the specific resistance of the carbon heater becomes higher in comparison to a specification thereof. When the content of the novolac resin exceeds 30%, the carbon composite has poor stability in terms of a shape after an injection process is performed thereon, and the finally manufactured carbon heater is more likely to have a dimensional defect, and the carbon content in the carbon heater becomes higher, whereby the specific resistance of the carbon heater is lower in comparison to the specification thereof.

Also, the carbon composite composition of the present invention includes a lubricant as an essential component for reducing the friction between the composition and a die during the extrusion process. In the present invention, a final product is a carbon heater, and thus it is preferable to include carbon as a lubricant component.

In the present invention the lubricant comprises graphite.

Graphite has excellent lubrication properties during the extrusion process.

As it pertains to this matter, the present inventors identified a function of the novolac resin as a curing agent in addition to a function of graphite as a lubricant, for the first time.

As described above, it is generally known that a novolac resin is not cured by itself. In particular, it is known that a curing agent such as "hexamine" is required for thermal curing. However, in the present invention, it was first identified that the carbon composite composition of the present invention is cured on its own without the curing agent after the extrusion process is performed thereon when the graphite is included in the carbon composite composition. But, a mechanism thereof has not been identified, yet.

The graphite is preferably added in an amount of 0.1 to 10% based on the total weight of the composition of the present invention. When a content of the graphite is less than 0.1%, the friction between the composition and the die increases during the extrusion process, and after the extrusion process, the curing is insufficient and the carbon composite has poor stability in terms of a shape, and thereby the finally manufactured carbon heater is more likely to have a dimensional defect. When the content of the graphite exceeds 10%, the curing reaction proceeds too fast during the extrusion process, which makes processing such as extruding difficult, and the carbon content in the finally manufactured carbon heater becomes higher, whereby the specific resistance of the carbon heater is lower in comparison to the specification thereof.

A method for manufacturing a carbon heater using the carbon composite composition of the present invention will be described.

A general method used to manufacture another functional material using the carbon composite composition may be applied to the carbon heater manufacturing method of the present invention.

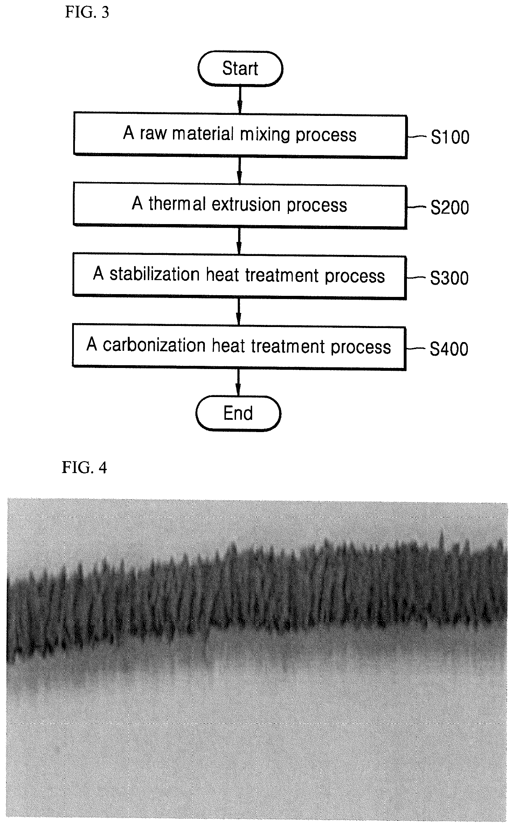

More specifically, as shown in FIG. 3, the manufacturing method of the present invention starts with a process of mixing an inorganic power and a phenolic resin binder (S 100).

In the mixing process, raw materials each having desired components and composition ranges are sufficiently mixed for a desired time using an apparatus such as an attrition mill.

Next, the mixed raw materials are thermally extruded using a general extruder widely used in the field of polymer injection (S 200). An extrusion condition used for the present invention is a speed of 60 rpm at 100 to 200°C, but is not limited thereto. The extrusion condition may be changed depending on the components and the composition ranges of the inorganic powder and the binder.

The extruded carbon composite composition is subjected to a stabilization heat treatment process at a high temperature (S 300). The stabilization heat treatment process aims to cure the binder so that the extruded carbon composite composition may maintain its extruded shape. In the present invention, the stabilization heat treatment process is preferably performed at 200 to 300°C for 0.1 to 2 hours.

Next, the cured carbon composite composition is subjected to a carbonization heat treatment process (S 400). The carbonization heat treatment process aims to produce an active component of the carbon heater that is a final product, and includes a first step of out-gassing components which volatilize a volatile component among the components constituting the carbon composite composition, and a second step of carbonizing the remaining components subsequent to the out-gassing step.

In the present invention, the carbonization heat treatment process is preferably divided into two steps. First, a first carbonization heat treatment process is performed at a relatively low temperature of 600-1,000°C for 0.1 to 2 hours, and the first carbonization heat treatment process mainly aims to volatilize components other than carbon among binder components, and other components other than carbon which may exist in impurities and the like included in components other than the binder components among components of the composition. A second carbonization heat treatment process is performed, immediately after the first carbonization heat treatment process. The second carbonization heat treatment process is performed at 1,200 to 1,400°C for 0.5 to 3 hours, and aims to carbonize components of the carbon composite composition remaining after the first carbonization heat treatment process.

In order to improve productivity, the first and second carbonization heat treatment processes may be integrated and operated in a single carbonization heat treatment process.

Also, the present invention may include a separate post-treatment process to adjust or improve mechanical and/or electrical properties of the carbon heater subsequent to the carbonization heat treatment process.

The carbon composite produced after the second heat treatment process is combined with a connector and a sealing tube to manufacture the carbon heater that is a final product.

Hereinafter, the present invention will be described in more detailed through various examples and comparative examples. The following examples are merely exemplary to more clearly describe the present invention, and are not limited thereto.

### Comparative Example 1

First, a binary composition was prepared by mixing 1 type of inorganic powder selected from a group of SiC, SiO₂, Al₂O₃ and ZrO₂ shown in Table 1 above with a novolac resin as a binder.

The prepared binary composition was mixed uniformly through a step of mixing raw materials, and then extruded.

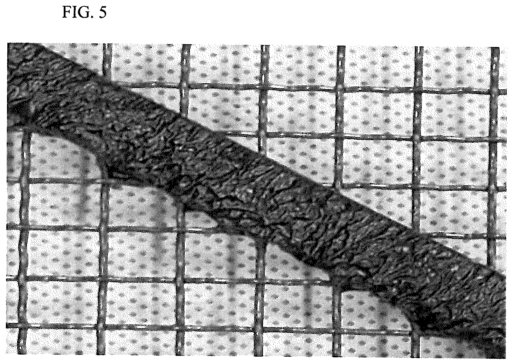

FIG. 4 and FIG. 5 show the carbon composite extruded and the carbon composite subjected to the stabilization heat treatment using the binary carbon composite composition, respectively. As shown in FIGS. 4 and 5, it was impossible to extrude the binary carbon composite composition into a desired shape due to extremely low mechanical stability after extrusion molding and molding are performed thereon (FIG. 4), and the binary carbon composite composition had dimensional and surficial defects which make impossible to be used as a carbon heater even though the stabilization heat treatment was performed thereon after the curing agent is added (FIG. 5).

### Example 1

A ternary carbon composite composition was prepared by adding 23% of the novolac resin as a binder and 3% of the graphite as a lubricant to 74% of SiC among the inorganic power components shown in Table 1 above.

The prepared ternary composition was mixed uniformly through the step of mixing raw materials and extruded, and subsequently was subjected to the stabilization heat treatment and the carbonization heat treatment processes, followed by being processed into a final carbon heater. Thereafter, electrical properties of the final carbon heater were evaluated.

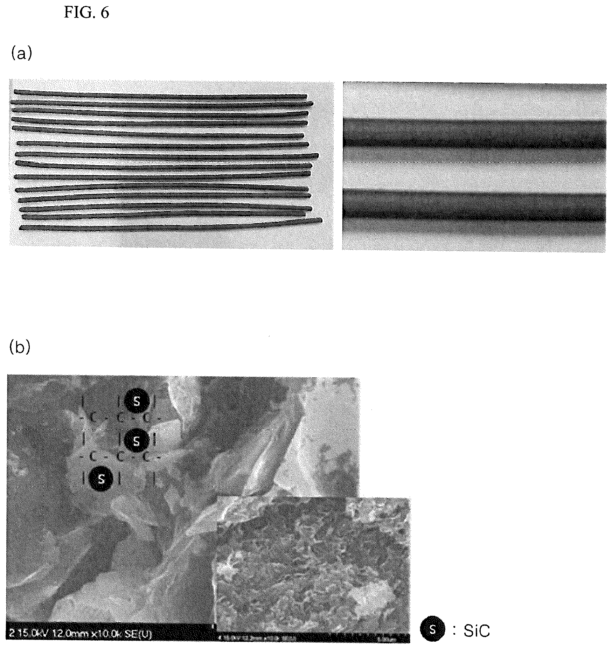

FIG. 6 shows a surface and a cross-section of the ternary carbon composite after the stabilization heat treatment process is performed thereon. As shown in FIG. 6, the carbon composite composed of the ternary composition has excellent macroscopic mechanical stability and almost no defects on the surface thereof. Also, it is shown that SiC is very uniformly distributed by the binder even in the cross-sectional microstructure of the carbon composite without segregation, agglomeration, or macro voids.

A carbon heater was manufactured using the ternary composition of Example 1, and the electrical properties thereof were evaluated. Electrical resistance of the carbon heater was measured to be about 4 to 5 Ω at an applied voltage of 115 V.

### Comparative Example 2

As Comparative Example 2 with respect to Example 1, another ternary carbon composite composition was prepared to include the inorganic powder substituted only with SiO₂ or Al₂O₃ instead of SiC and the other components and composition ranges same as those of Example 1.

The carbon composite composition of Comparative Example 2 was identified to have the same level of mechanical stability as that of Example 1. However, the electrical resistance of the carbon heater manufactured using the carbon composite composition of Comparative Example 2 is measured to be close to infinity at an applied voltage of 115 V. Thus, when only oxide is included as a base material of the carbon heater, it is very difficult to be used as a carbon heater.

### Example 2

A quaternary carbon composite composition was prepared by adding a novolac resin as a binder and graphite as a lubricant to an inorganic powder which is based on SiC and further includes SiO₂ as a specific resistance controlling agent among the inorganic power components shown in Table 1 above.

In the same manner as in Example 1, the prepared quaternary composition was mixed uniformly through the step of mixing raw materials and extruded, and subsequently was subjected to the stabilization heat treatment and the carbonization heat treatment processes, followed by being processed into a final carbon heater. Thereafter, electrical properties of the final carbon heater were evaluated.

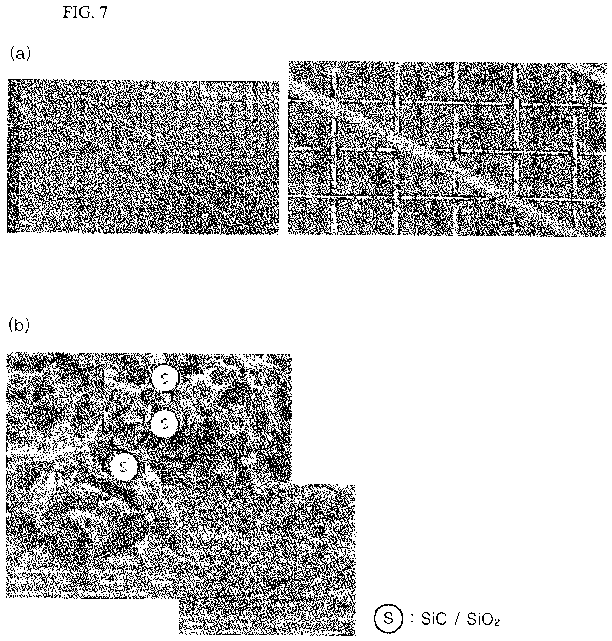

FIG. 7 shows a surface and a cross-section of the quaternary carbon composite after the stabilization heat treatment process is performed thereon. As shown in FIG. 7, the carbon composite composed of the ternary composition has excellent macroscopic mechanical stability and almost no defects on the surface thereof. Also, it is shown that SiC is uniformly distributed by the binder even in the cross-sectional microstructure of the carbon composite without segregation, agglomeration, or macro voids. In particular, SiC and SiO₂ were uniformly distributed without macroscopic/micro segregation.

The following Table 2 shows electrical properties of a carbon heater made of ternary and quaternary carbon composites (In Table 2, PN, GP, SC and SO represent the novolac resin, graphite, SiC and SiO₂, respectively). As shown in Table 2, the more the content of SiO₂ increases, the more the electrical resistance of the carbon heater increases, while the electrical conductivity of the carbon heater decreases. Such experimental results indicate that the electrical resistivity of the carbon heater made of the quaternary carbon composite may be controlled as necessary, which means that the degree of freedom of electrical design can be greatly improved in comparison to the carbon heater made of the ternary carbon composite. Conversely, when the content of silicon oxide exceeded 24%, the thermal conductivity thereof was drastically lowered, and thus a terminal disconnection occurred.

**<Table 2. Electrical properties of a carbon heater)**

| | PN23 GP03 SC49 SO25 | PN23 GP03 SC56 SO18 | PN23 GP03 SC59 SO15 | PN23 GP03 SC62 SO12 | PN23 GP03 SC74 |
|---|---|---|---|---|---|
| Applied voltage | 115V | 115V | 115V | 115V | 115V |
| Length (m) | 22.00 | 23.00 | 22.30 | 20.00 | 20.00 |
| Electrical resistance (Ω) | 720.30 | 88.63 | 29.13 | 12.93 | 4-5 |
| Electrical conductivity (S/cm) | 0.21 | 1.18 | 6.25 | 12.50 | 46.00 |

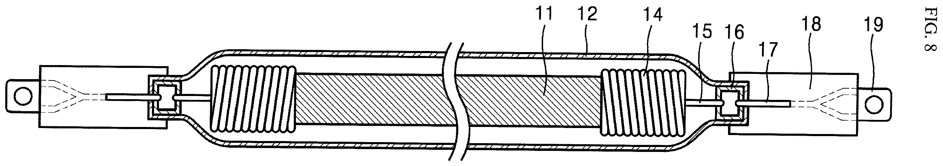

FIG. 8 shows a carbon heater product made of a heating element 11 using the composition of the present invention. The actual carbon heater includes the heating element 11 and a connector 14 for supporting the heating element 11 and supplying power from the outside. Also, the carbon heater further includes a tube 12 enclosing the heating element 14 and containing inert gas, a metal wire 15 for supplying electricity to the heating element 11 from the outside, a metal piece 16, an exterior electrode 17 and the like.

The present invention is described with reference to illustrative drawings, but is not limited by the examples described herein and accompanying drawings. It should be apparent to those skilled in the art that various changes which are not exemplified herein but are still within the scope of the present invention may be made. Further, it should be apparent that, although an effect from a configuration of the present invention are not clearly described in the examples of the present invention, any effect, which can be predicted from the corresponding configuration, is also to be acknowledged.

### (Description of Symbols)

| | | | |
|---|---|---|---|
| 1: | Oven | 2: | Cavity |
| 3: | Door | 4: | Magnetron |
| 5: | Sheath heater | 6: | Heater |
| 11: | Heating element | 12: | Tube |
| 14: | Connector | 15: | Metal wire |
| 16: | Metal piece | 17: | Exterior electrode |
| 18: | Exterior connector | 19: | Exterior terminal |
| S 100: | Mixing process | S 200: | Extrusion process |
| S 300: | Stabilization heat treatment process | | |
| S 400: | Carbonization heat treatment process | | |

## Claims

1. A carbon composite composition for manufacturing a resistance heating element (11), comprising:
a binder;
a lubricant;
a specific resistance controlling agent; and
a base material which comprises silicon carbide, wherein the base material determines a specific resistance of the resistance heating element at a high temperature;
**characterized in that** the binder comprises a novolac resin, the specific resistance controlling agent comprises aluminum oxide and/or silicon oxide, and the lubricant comprises graphite.

2. The carbon composite composition according to claim 1, wherein the silicon carbide is present in an amount of 50 to 75 wt.%, based on the total weight of the composition.

3. The carbon composite composition according to claim 1 or 2, wherein the silicon oxide is present in an amount of 24 wt.% or less, based on the total weight of the composition.

4. The carbon composite composition according to any one of claims 1 to 3, wherein the novolac resin is present in an amount of 15 to 30 wt.%, based on the total weight of the composition.

5. The carbon composite composition according to claim 1, wherein the graphite is present in an amount of 0.1 to 10 wt.%, based on the total weight of the composition.

6. The carbon composite composition according to claim 1, wherein the novolac resin is present in an amount of 15 to 30 wt.%; the graphite is present in an amount of 0.1 to 10 wt.%; and the silicon carbide is present in an amount of 50 to 70 wt.%, based on the total weight of the composition.

7. The carbon composite composition according to any one of claims 1 to 6, wherein the composition comprises a specific resistance controlling agent; the specific resistance controlling agent is silicon oxide; and the silicon oxide is present in an amount of 24 wt.% or less, based on the total weight of the composition.

8. A resistance heating element (11) obtained from the carbon composite composition of any of claims 1 to 7.

9. A carbon heater comprising the resistance heating element (11) according to claim 8.

## Patentansprüche

1. Eine Kohlenstoff-Verbundwerkstoff-Zusammensetzung zur Herstellung eines Widerstandsheizelements (11), umfassend
ein Bindemittel;
ein Schmiermittel;
ein Mittel zur Steuerung des spezifischen Widerstands; und
ein Basismaterial, das Siliciumkarbid umfasst, wobei das Basismaterial einen spezifischen Widerstand des Widerstandsheizelements bei einer hohen Temperatur bestimmt;
**dadurch gekennzeichnet, dass** das Bindemittel ein Novolakharz umfasst, das Mittel zur Steuerung des spezifischen Widerstands Aluminiumoxid und/oder Siliciumoxid umfasst und das Schmiermittel Graphit umfasst.

2. Die Kohlenstoff-Verbundwerkstoff-Zusammensetzung nach Anspruch 1, wobei das Siliciumcarbid in einer Menge von 50 bis 75 Gew.-%, bezogen auf das Gesamtgewicht der Zusammensetzung, vorhanden ist.

3. Die Kohlenstoff-Verbundwerkstoff-Zusammensetzung nach Anspruch 1 oder 2, wobei das Siliciumoxid in einer Menge von 24 Gew.-% oder weniger, bezogen auf das Gesamtgewicht der Zusammensetzung, vorhanden ist.

4. Die Kohlenstoff-Verbundwerkstoff-Zusammensetzung nach einem der Ansprüche 1 bis 3, wobei das Novolakharz in einer Menge von 15 bis 30 Gew.-%, bezogen auf das Gesamtgewicht der Zusammensetzung, vorhanden ist.

5. Die Kohlenstoff-Verbundwerkstoff-Zusammensetzung nach Anspruch 1, wobei der Graphit in einer Menge von 0,1 bis 10 Gew.-%, bezogen auf das Gesamtgewicht der Zusammensetzung, vorhanden ist.

6. Die Kohlenstoff-Verbundwerkstoff-Zusammensetzung nach Anspruch 1, wobei das Novolakharz in einer Menge von 15 bis 30 Gew.-% vorhanden ist, der Graphit in einer Menge von 0,1 bis 10 Gew.-% vorhanden ist und das Siliciumcarbid in einer Menge von 50 bis 70 Gew.-%, bezogen auf das Gesamtgewicht der Zusammensetzung, vorhanden ist.

7. Die Kohlenstoff-Verbundwerkstoff-Zusammensetzung nach einem der Ansprüche 1 bis 6, wobei die Zusammensetzung ein Mittel zur Steuerung des spezifischen Widerstands umfasst; das Mittel zur Steuerung des spezifischen Widerstands Siliciumoxid ist; und das Siliciumoxid in einer Menge von 24 Gew.-% oder weniger, bezogen auf das Gesamtgewicht der Zusammensetzung, vorhanden ist.

8. Ein Widerstandsheizelement (11), erhalten aus der Kohlenstoff-Verbundwerkstoff-Zusammensetzung nach einem der Ansprüche 1 bis 7.

9. Eine Kohlenstoff-Heizvorrichtung, umfassend das Widerstandsheizelement (11) nach Anspruch 8.

## Revendications

1. Composition de composite de carbone pour fabriquer un élément chauffant à résistance (11), comprenant :
un liant ;
un lubrifiant ;
un agent contrôlant la résistance spécifique ; et
un matériau de base qui comprend du carbure de silicium, lequel matériau de base détermine la résistance spécifique de l'élément chauffant à résistance à une température élevée ;
**caractérisée en ce que** le liant comprend une résine novolaque, l'agent contrôlant la résistance spécifique comprend de l'oxyde d'aluminium et/ou de l'oxyde de silicium, et le lubrifiant comprend du graphite.

2. Composition de composite de carbone selon la revendication 1, dans laquelle le carbure de silicium est présent en une quantité de 50 à 75 % en poids par rapport au poids total de la composition.

3. Composition de composite de carbone selon la revendication 1 ou 2, dans laquelle l'oxyde de silicium est présent en une quantité de 24 % en poids ou moins par rapport au poids total de la composition.

4. Composition de composite de carbone selon l'une quelconque des revendications 1 à 3, dans laquelle la résine novolaque est présente en une quantité de 15 à 30 % en poids par rapport au poids total de la composition.

5. Composition de composite de carbone selon la revendication 1, dans laquelle le graphite est présent en une quantité de 0,1 à 10 % en poids par rapport au poids total de la composition.

6. Composition de composite de carbone selon la revendication 1, dans laquelle la résine novolaque est présente en une quantité de 15 à 30 % en poids ; le graphite est présent en une quantité de 0,1 à 10 % en poids ; et le carbure de silicium est présent en une quantité de 50 à 70 % en poids par rapport au poids total de la composition.

7. Composition de composite de carbone selon l'une quelconque des revendications 1 à 6, laquelle composition comprend un agent contrôlant la résistance spécifique ; l'agent contrôlant la résistance spécifique est l'oxyde de silicium ; et l'oxyde de silicium est présent en une quantité de 24 % en poids ou moins, par rapport au poids total de la composition.

8. Elément chauffant à résistance (11) obtenu à partir de la composition de composite de carbone de l'une quelconque des revendications 1 à 7.

9. Dispositif de chauffage au carbone comprenant l'élément chauffant à résistance (11) selon la revendication 8.
